# EUROPEAN PATENT APPLICATION

(11) **EP 0 640 902 A2**
(43) Date of publication of application: **01.03.1995**
(21) Application number: 94112601.3
(22) Date of filing: 12.08.1994
(51) Int. Cl.: G05B 19/42

(54) **Method for programming computer controlled multi-axis devices**

(30) Priority: 26.08.1993 US 112394
(71) Applicant: FARO TECHNOLOGIES, Lake Mary, Florida 32746-6204 (US)
(72) Inventor: Raab, Simon, Longwood, Florida 32779 (US)
(74) Representative: Freylinger, Ernest T.

(57) **Abstract**

A method for programming a computer controlled multi-axis device (for example a CNC machining device) is provided. First a measurement probe (for example a simulated cutting tool (402)) of a passive three dimensional coordinate measuring machine (CMM) (10) is operated by an experienced operator manually through a selected three dimensional path (404); thus developing and storing three dimensional data of position and/or orientation of the measurement probe. These data are transferred to the controller of the multi-axis device to replicate with the multi-axis device the selected path. A preferred CMM (10) comprises a lightweight, multi jointed measuring arm (12).

## Description

This invention relates to a novel method for programming the tool path of a multi-axis machine tool or robot.

A serious limitation in the practical usage of CNC or computer numerically controlled devices such as robotics and 5-axis machine centers is the time and effort required to program intricate and convoluted paths prior to performing typical robotic functions (such as welding or sanding) and/or typical machine tool functions (such as machining complex molded parts). Presently, this programming process entails a careful and meticulous step-by-step simulation based on trial and error.

The object of the present invention is to provide a method that facilitates programming of a computer controlled multi-axis device.

According to the present invention, this problem is solved by a method comprising the steps of:
a) operating a measurement probe of a passive three dimensional coordinate measuring machine (CMM) through a selected three dimensional path or operation;
b) developing three dimensional data of position and/or orientation from step a) and storing said data;
c) transferring said data to the controller of said multi-axis device; and
d) causing the multi-axis device to replicate the selected path or operation based on said data developed by the coordinate measuring machine.

The method according to this invention allows for example easy programming of the complex paths required for operations of robotics and multi-axis machine centers in the performance of typical functions such as sanding or welding (commonly associated with robotics) and machining molded parts (commonly associated with multi-axis machine tools). In accordance with this method, it is possible to easily replicate in a computer controlled machine, the operation or path (defined both by direction and/or orientation) of an experienced human operator. This is accomplished using the measurement probe of an independant, passive three dimensional CMM. The measurement probe or digitizer end of the CMM is for example a simulated tool. The CMM operator may thus use a lightweight, easy-to-handle passive electrogoniometric device and emulates either a desired tool path or manufacturing operation. As this path or operation is emulated, the position and orientation data (in both the X, Y and Z directions and/or I, J and K orientations) of the CMM is accumulated and stored. This data is then transferred, preferrably using industry standard formats, to a computer numerically controlled (CNC) device such as a robot or machining center for the reproduction of the motions emulated using the CMM. As a result, the computer controlled device has provided to it, in a quick and efficient manner, the exact path and/or operations data for performing a task regardless of the complexity involved. Prior to this method, the programming of such tasks involved meticulously and carefully programmed step-by-step sequences using simulation and trial and error.

Presently, coordinate measurement machines or CMM's measure objects in a space using three linear scales. These devices are typically non-portable, expensive and limited in the size or volume that can be easily measured. FARO Technologies, Inc. of Lake Mary, Florida (USA) has successfully produced a series of electrogoniometer-type digitizing devices for the medical field. In particular, FARO Technologies, Inc. has produced systems for skeletal analysis known as METRECOM® and systems for use in surgical applications known as SURGICOM™ . Electrogoniometer-type devices of the type embodied in the METRECOM and SURGICOM systems are disclosed in US-A-4,670,851 and U.S. Application Serial Nos. 593,469 filed October 2, 1990 and 562,213 filed July 31, 1990 all of which are assigned to FARO Technologies, Inc. of Lake Mary, Florida (USA). While well suited for their intended purposes, the METRECOM and SURGICOM electrogoniometer-type digitizing systems are not well suited for general industrial applications. Therefore, there is a need for an improved, accurate, and low cost CMM for carrying out the method of the present invention.

In accordance with a preferred embodiment the passive three dimensional coordinate measuring machine is a novel, portable coordinate measuring machine (CMM) comprising a multijointed (preferably six joints) manually positionable measuring arm, supporting the measuring probe, for accurately and easily measuring a volume, comprising a sphere preferably ranging from six to eight feet in diameter (but which may also cover diameters more or less than this range) and a measuring accuracy of preferably 2 Sigma +/- 0.0005 inch (and optimally 2 Sigma +/- 0.001 inch). In addition to the measuring arm, the measuring machine employs a controller (or serial box) which acts as the electronic interface between the arm and a host computer.

The mechanical measuring arm used in the CMM is generally comprised of a plurality of transfer housings (with each transfer housing comprising a joint and defining one degree of rotational freedom) and extension members attached to each other with adjacent transfer housings being disposed at right angles to define a movable arm preferably having five or six degrees of freedom. Each transfer housing includes measurement transducers and novel bearing arrangements. These bearing arrangements include prestressed bearings formed of counter-positioned conical roller bearings and stiffening thrust bearings for high bending stiffness with low profile structure. In addition, each transfer casing includes visual and audio endstop indicators to protect against mechanical overload due to mechanical stressing.

The movable arm is attached to a base or post which advantageously includes: (1) a temperature monitoring board for monitoring temperature stability; (2) an encoder mounting plate for universal encoder selection; (3) an EEPROM circuit board containing calibration and identification data so as to avoid unit mix-up; and (4) a preamplifier board mounted near the encoder mounting plate for transmission of high amplified signals to a remote counter board in the controller.

The transfer casings are modular permitting variable assembly configurations and the entire movable arm assembly is constructed of one material for ensuring consistent coefficient of thermal expansion (CTE). Internal wire routing with rotation stops and wire coiling cavities permit complete enclosure of large numbers of wires.

The measurement arm preferably has a spring counterbalanced and shock absorbed support mechanism for user comfort. The measurement probe preferably has a two switch (take/accept) data entry device for allowing high precision measurements with manual handling. Also, a generalized option of the type used in the prior art METRECOM system is provided for the measurement of variables in three dimensions (e.g., temperature may be measured in three dimensions using a thermocouple attached to the option port).

The use of a discrete microprocessor-based controller box permits preprocessing of specific calculations without host level processing requirements. This is accomplished by mounting an intelligent preprocessor in the controller box which provides programmable adaptability and compatibility with a variety of external hosts (e.g., external computers). The serial box also provides intelligent multi-protocol evaluation and autoswitching by sensing communication requirements from the host. For example, a host computer running software from one manufacturer will generate call requests of one form which are automatically sensed by the controller box. Still other features of the controller box include serial port communications for standardized long distance communications in a variety of industrial environments and novel analog-to-digital/digital counter boards for simultaneous capture of every encoder (located in the transfer housing) resulting in highly accurate measurements.

Efficient on-site calibration of the CMM of the present invention is improved through the use of a reference ball positioned at the base of the CMM to obviate potential mounting complications to system accuracy evaluation. In addition, the CMM advantageously includes means for performing a volumetric accuracy measurement protocol on an interim basis, preferably using a novel cone ballbar device.

The above-discussed and other features and advantages of the present invention will be appreciated and understood by those skilled in the art from the following detailed description and drawings.

Referring to the drawings, wherein like elements are numbered alike in the several FIGURES:
FIGURE 1 is a front diagrammatic view depicting the three dimensional measuring system of the present invention including a coordinate measuring machine, a controller box and a host computer;
FIGURE 2 is a side elevation view depicting the host computer mounted on the serial box, which is in turn, mounted on a maneuverable arm;
FIGURE 3 is a side elevation view of the three dimensional measuring system of the present invention mounted on a theodolite stand;
FIGURE 4 is a rear elevation view of the CMM shown in FIGURE 1;
FIGURE 5 is a longitudinal view, partly in cross-section of the CMM of FIGURE 1;
FIGURE 6 is an exploded, side elevation view of a transfer housing used in the CMM of FIGURE 1;
FIGURES 6A and 6B are views along the lines 6A-6A and 6B-6B, respectively, of FIGURE 6;
FIGURE 7 is a cross-sectional elevation view of two assembled, transversely orientated transfer housings;
FIGURE 8 is an enlarged, side elevation view of a counterbalanced spring device used in the CMM of FIGURE 1;
FIGURES 9A and 9B are top and bottom plan views depicting the handle/probe assembly of FIGURE 1;
FIGURES 10A and 10B are respective side elevation views of a ball probe and a point probe;
FIGURE 11 is an enlarged front view of the controller box of FIGURE 1;
FIGURE 12 is an enlarged rear view of the controller box of FIGURE 1;
FIGURE 13 is a schematic view of the electronic components for the three dimensional measuring system of FIGURE 1;
FIGURE 14 is a side elevation view of the CMM of FIGURE 1 depicting a probe tip calibration system;
FIGURE 15 is a schematic top plan view showing a method of calibrating the probe tip;
FIGURE 16 is a side elevation view of the CMM of FIGURE 1 being calibrated with a ballbar;
FIGURES 17 and 18 are side elevation views of the CMM of FIGURE 1 being calibrated by a novel cone ballbar device;
FIGURE 19 is a side elevation view depicting a method for optimizing the CMM of FIGURE 1 using an optimization jig;
FIGURES 20A-E are respective front, rear, top, right side and left side elevation views of the precision step gauge used in the jig of FIGURE 19;
FIGURE 21 is a schematic view showing a method of optimizing the CMM of FIGURE 1 utilizing the apparatus of FIGURE 19;
FIGURE 22 is a flow chart depicting the method steps for programming computer controlled machine tools and robots using the CMM of the present invention;
FIGURES 23A-C are sequential diagrammatic view of the method of FIGURE 22 being performed in connection with a computer controlled machine tool; and
FIGURE 24 is a diagrammatic view of the method of FIGURE 22 being performed in connection with a computer controlled robot.

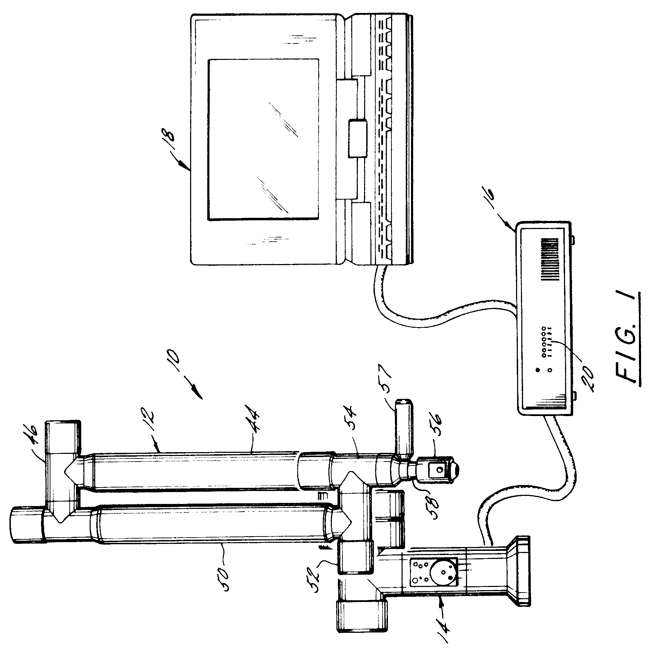

Referring first to FIGURE 1, the three dimensional measuring system of the present invention generally comprises a coordinate measuring machine (CMM) 10 composed of a manually operated multijointed arm 12 and a support base or post 14, a controller or serial box 16 and a host computer 18. It will be appreciated that CMM 10 electronically communicates with serial box 16 which, in turn, electronically communicates with host computer 18.

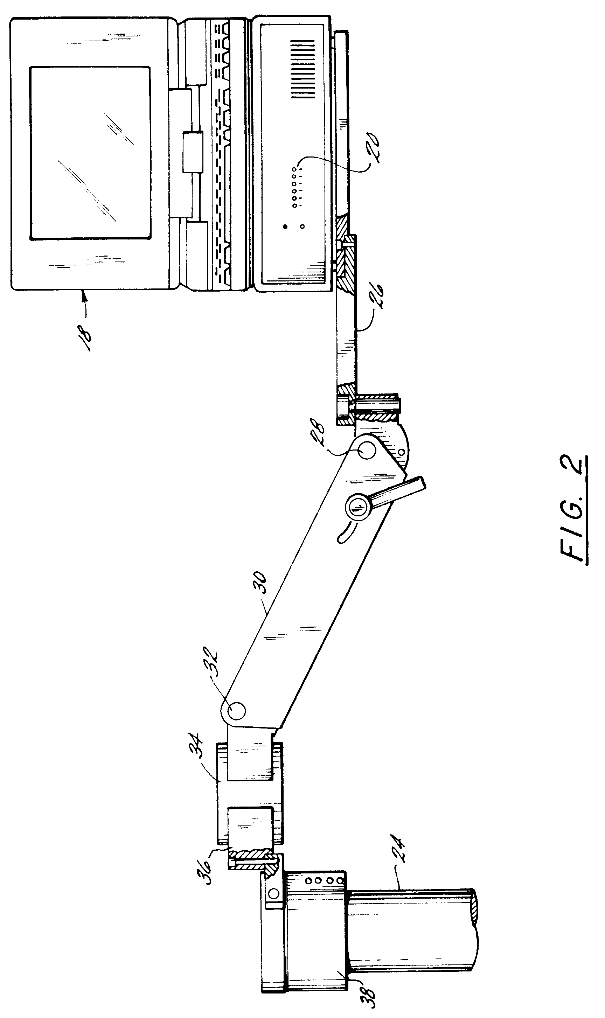

As will be discussed in more detail hereinafter, CMM 10 includes transducers (e.g., one transducer for each degree of freedom) which gather rotational positioning data and forward this basic data to serial box 16. Serial box 16 provides a reduction in the overall requirements of host computer 18 to handle certain complex calculations and provides certain preliminary data manipulations. As shown in FIGURE 2, serial box 16 is intended to be positioned under the host computer 18 (such as the notebook computer shown in FIGURE 2) and includes EEPROMS which contain data handling software, a microcomputer processor, a signal processing board and a number of indicator lights 20. As mentioned, basic transducer data is sent from CMM 10 to serial box 16. Serial box 16 then processes the raw transducer data on an ongoing basis and responds to the queries of the host computer with the desired three-dimensional positional or orientational information.

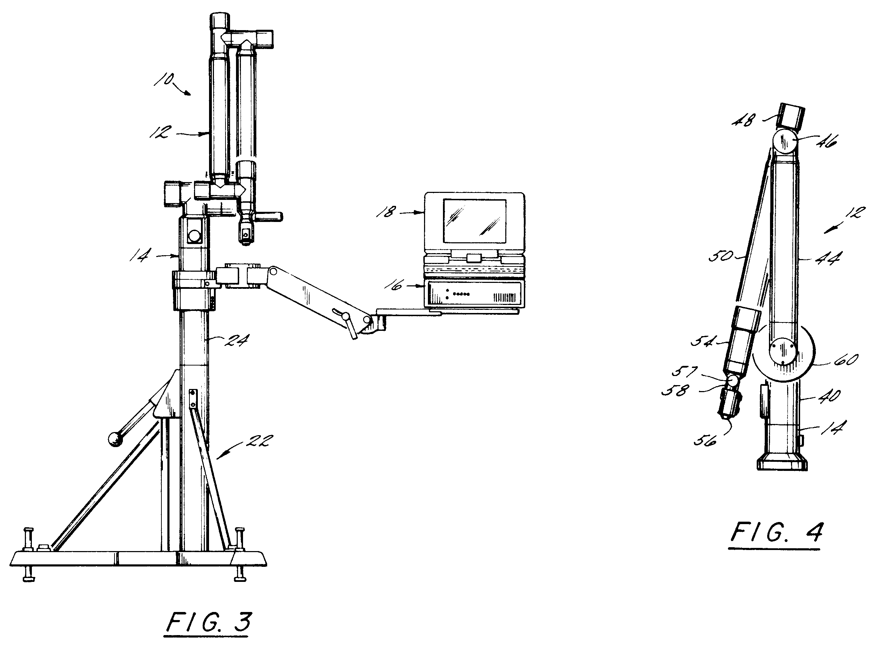

Preferably, all three components defining the three dimensional measuring system of this invention (e.g., CMM 10, serial box 16 and host computer 18) are mounted on either a fixed mounting surface using a rigid plate and/or a standard optical measurement instrument thread followed by mounting on a known and standard theodolite mobile stand such as shown at 22 in FIGURE 3. Preferably, theodolite stand 22 comprises a part no. MWS750 manufactured by Brunson (U.S.A.). Such a mobile stand is characterized by a stable rolling platform with an extendible vertical tower and with common attachments and locking mechanisms. As shown in FIGURES 2 and 3, support base 14 of CMM 10 is threaded or otherwise attached onto a vertical support member 24 of stand 22 while serial box 16/host 18 is supported on a shelf 26 pivotally connected at a first joint 28 to an arm 30 which is pivotally connected to a second joint 32. Connecting member 34 interconnects joint 32 to a swivel connection 36 attached to a cap 38 mounted over the top of member 24.

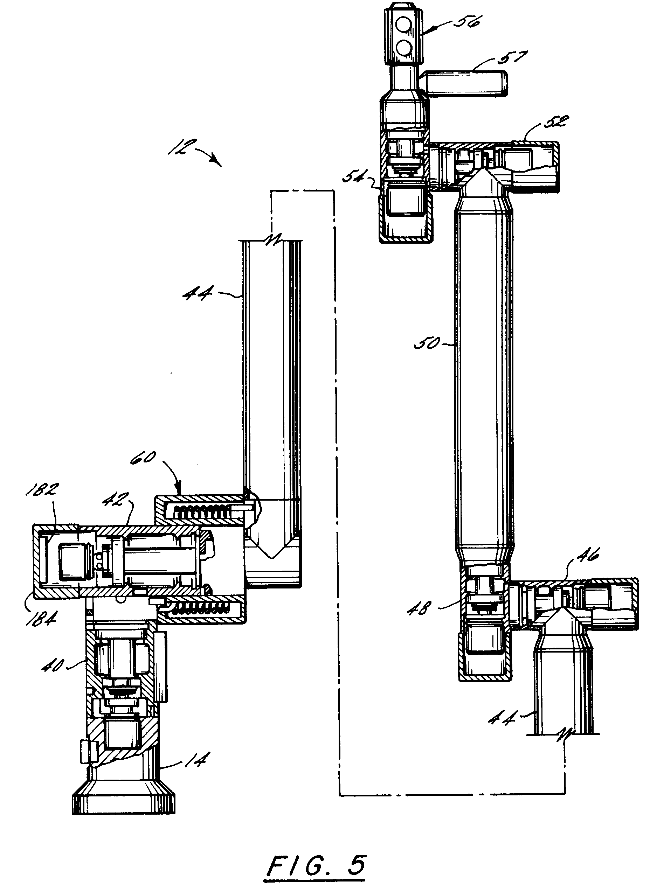

Referring now to FIGURES 1 and 4-9, CMM 10 will now be described in detail. As best shown in FIGURE 5, CMM 10 comprises a base 14 connected to a first set of two transfer housings including a first transfer housing 40 which, in turn, is connected to a second transfer housing 42 (positioned transverse to housing 40). A first extension member 44 is rigidly attached to a second set of two transfer housings including a third transfer housing 46 transversely attached to a fourth transfer housing 48. First extension member 44 is positioned perpendicularly between transfer housings 42 and 46. A second extension member 50 is aligned with an rigidly attached to transfer housing 48. Rigid extension member 50 is rigidly attached to a third set of two transfer housings including a fifth transfer housing 52 transversely attached to a sixth transfer housing 54. Fifth transfer housing 54 has attached thereto a handle/probe assembly 56.

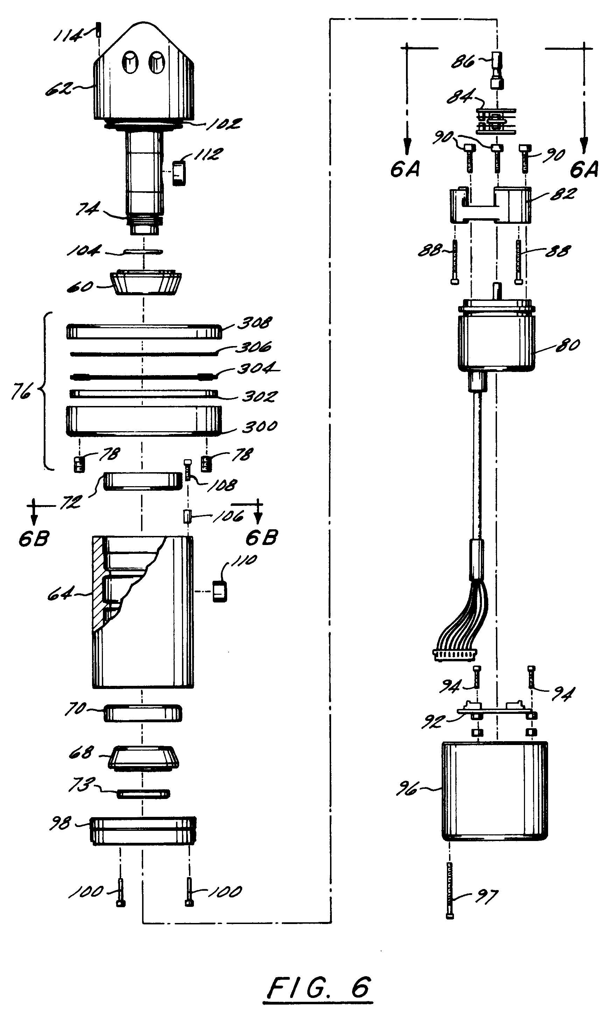

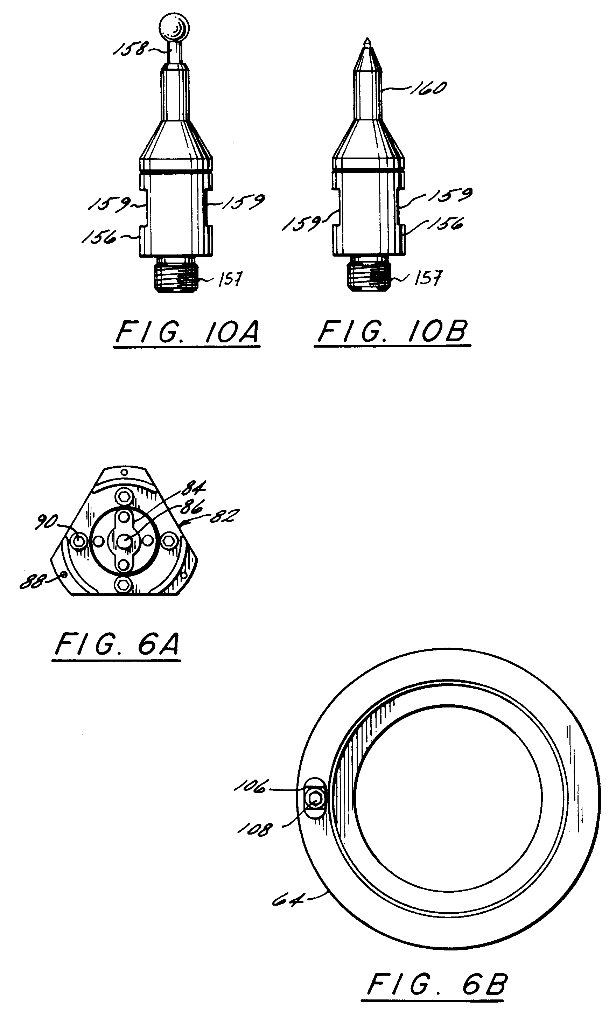

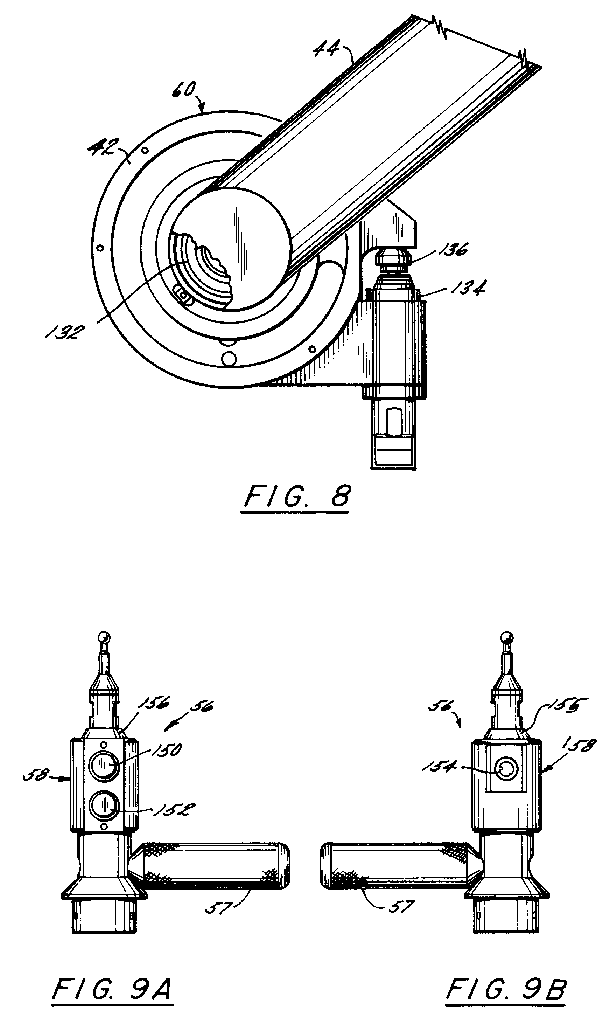

In general (and as will be discussed in more detail hereinafter), position sensing transducers are mounted in each of the six transfer housings 40, 42, 46, 48, 52 and 54. Each housing is comprised of bearing supports and transducer compartments which are made to then cylindrically attach to each other using 45^{o} angled attachment screws (FIGURE 6). At the base 14 is a counterbalanced spring device 60 for support of arm 12 in its standard vertical configuration (FIGURE 8).

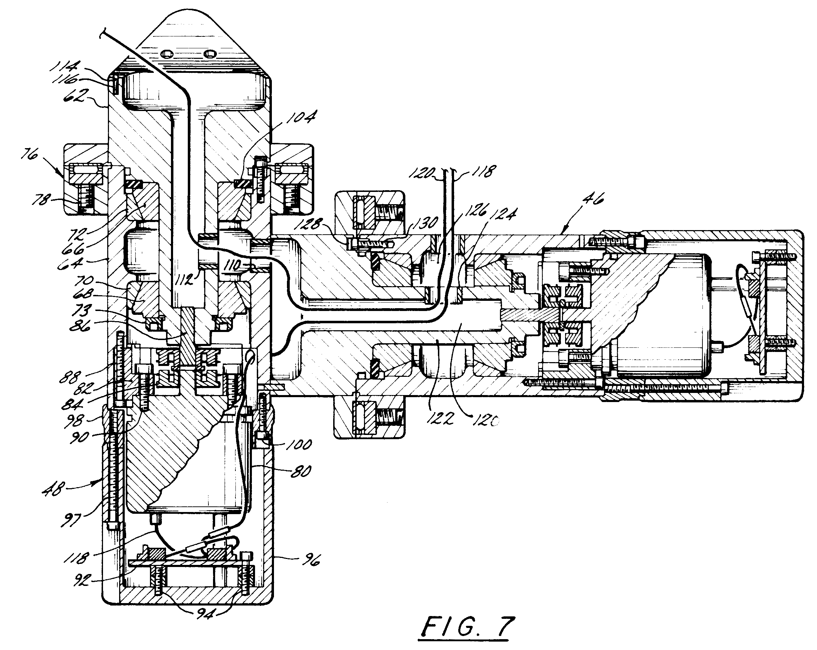

Turning now to FIGURES 6 and 7, a detailed description will be made of a transfer housing and its internal components. It will be appreciated that FIGURE 6 is an exploded view of a transfer housing, while FIGURE 7 shows an enlarged view of the transversely oriented and attached transfer housings (e.g., housings 46 and 48). Each housing includes an internal carrier 62 and an external casing 64. Mechanical stability between internal carrier 62 and external casing 64 is provided by two counter-positioned (e.g., oppositely disposed) conical roller bearings 66, 68 positioned to compress against their respective conical seats 70, 72. Conical seats 70 and 72 are permanently affixed into the external transfer casing 64. Internal carrier 62 includes a shaft extending therefrom and terminating at a threading 74. Conical bearings 66, 69 are preferably made from hardened steel while seats 70, 72 are also made from hardened steel.

During assembly of transfer casing 48, a compressional force is applied using a nut 73, which is tightened to a specific torque on threads 74, providing a prestressed bearing situation resulting in no motion other than axial rotation under typically applied loads. Because of the necessity of a low profile of such an arm during manual handling and the attendant reduction in the overall stiffness, it is preferable and, in fact required in certain applications, to also install a thrust bearing 76 at the interface between carrier 62 and casing 64. Thrust bearing 76 provides further mechanical stiffening between carrier 62 and casing 64 of the transfer housing. Thrust bearing 76 comprises five elements including thrust adjustment ring 300, flat annular race 302, roller bearing and cage 304, annular race 306 and opposing thrust cover 308. Thrust bearing 76 is adjusted through a series of set screws 78 and provides for high bending stiffness. The transducer, (preferably an encoder 80 such as is available from Heindenhain under the designation Mini-Rod, part no. 450M-03600), is mounted to a universal mounting plate 82 for mounting into the transfer casing. Universal mounting plate 82 is important in satisfying possible component availability problems such that a change in manufacture of transducer 80 and, hence, the change in mounting screw configuration can be accommodated through modifications in the mounting plate 82. Mounting plate 82 is shown in FIGURE 6A as a triangular shaped plate having rounded corners. FIGURE 6A also depicts threaded members 88 and 90, a pin 86 and a coupler 84 (all of which are discussed hereinafter).

High accuracy rotational measurements using encoders 80 require that there should be no loads applied to the encoders and that motion of the transfer casing be accurately transmitted to the encoder despite small misalignments of the axis of the transfer casing and axis of the encoder. The angular transfer errors are well known to those skilled in the art from the published encoder literature. Communicating with encoder 80 is a coupler 84 such as is available from Rembrandt under the designation B1004R51R. An extension shaft 86 is utilized for ultimately connecting encoder 80 to the transfer casing 64. Shaft 86 is attached both to coupler 84 and to the end of carrier 62 at threading 74 using set screws 88, 90 (see FIGURE 7). In accordance with an important feature of this invention, an electronic preamplifier board 92 is positioned in close proximity to encoder 80 and is mounted (via screws 94) on the inside of cap cover 96. Cap cover 96 is attached to casing 64 via screw 97. A transition housing 98 interconnects cap cover 96 to casing 64 via screw 97 and screws 100. Sealing of the transfer housing to the environment is accomplished at the joint using an O-ring groove 102 in which is mounted a standard rubber O-ring groove 104 (see FIGURE 7). A rotational endstop 106 (to be discussed hereinafter), is best shown in FIGURE 6B and comprises a square shaped metal housing having an opening therethrough which is mounted onto casing 64 using bolt 108 threaded through the opening of the housing. Wire pass through grommets to stop abrasion over long term use are mounted on both carrier 62 and casing 64 at 110 and 112. A location pin 114 is received by a complimentary shaped recess 116 in carrier 62 for the purpose of maintaining relative orientation of two adjacent transfer casings.

Referring to FIGURE 7, for environmental and other reasons, it is important that all wire be completely hidden from sight and, therefore, contained within the arm 12. FIGURE 7 depicts two assembled transfer housings 46, 48 mounted perpendicularly to each other and demonstrating the passage of wires. It will be appreciated that during use of CMM 10, the encoder information from encoder 80 is amplified by processor board 92 and passed through wire 118 located in machined passageways. Wire 118 then passes through a channel in the shaft 122 of the internal carrier of the transfer casing 46 and through a grommetted hole 124 at which time it passes into a large cavity 126 machined on the external casing 64 of transfer housing 46. Cavity 126 permits the coiling of the wire strands during rotation of the transfer casing and is configured so as not to produce any wire abrasion and a minimum of wire bending. However, because the wire limits the overall ability to fully rotate, an incomplete spherical groove 128 is created in which is positioned an endstop screw 130, which limits the full rotation, in this case to 330^{o}. It will be appreciated that the pass through channel 120 and wire coiling cavities 122 are subsequently repeated in each transfer casing allowing the wires to progressively make their way down to the connector mounted at the base 14, resulting in no exposed wiring.

Turning now to FIGURE 8, the construction of the aluminum arm as well as the various bearings and transducers results in an accumulated weight of approximately 10 to 15 pounds at the probe handle assembly 56 of CMM 10. Under normal circumstances, this would create a significant amount of fatigue during use and, hence, must be counterbalanced. Weight counterbalances are not preferred since they would significantly increase the overall weight of the device when being considered for transportability. Therefore, in a preferred embodiment counterbalancing is performed using counterbalance device 60 which comprises a torsional spring 132 housed in a plastic casing and mounted at transfer housing 42 at base 14 for providing a lift for arm 12. Coiled torsional spring 132 can be mounted in a variety of positions affecting the overall pretension and, hence, may be usable on a variety of lengths and weights of arms 12. Similarly, due to the weight of arm 12 and the effect of the recoiled spring, significant shock loads may occur when repositioning the arm to the storage position. To prevent significant shocking of the arm upon retraction, air piston shock absorber 134 is also configured into the plastic housing of counterbalance spring device 60. This results in an absorption of the shock load and slow relaxation into the rest position. It will be appreciated that FIGURE 8 depicts the shock absorber 134 in a depressed configuration while FIGURES 16-18 depict shock absorber 134 in a fully extended position.

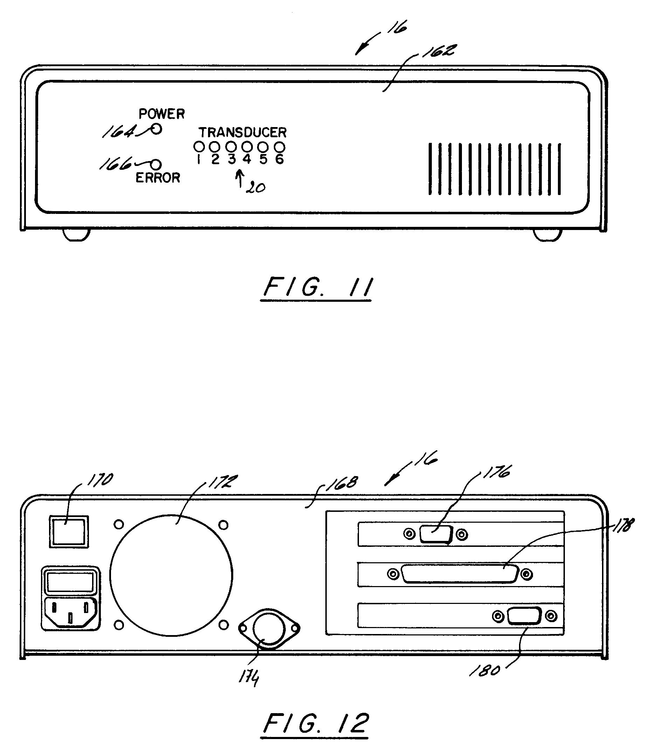

In FIGURES 9A and 9B, top and bottom views of probe handle assembly 56 are shown. Probe handle assembly 56 is meant to be held as either a pencil or pistol grip and possesses two switches (items 150 and 152 in FIGURE 9A) for data taking, a connector (item 154 in FIGURE 9B) for the attachment of optional electronics and a threaded mount 155 for receiving a variety of probes. Because the CMM 10 is a manual measurement device, the user must be capable of taking a measurement and then confirming to CMM 10 whether the measurement is acceptable or not. This is accomplished through the use of the two switches 150, 152. The front switch 150 is used to trap the 3-dimensional data information and the back switch 152 confirms its acceptance and transmits it to the host computer 18. On the back of a switch enclosure 158 (housing 150, 152) is connector 154 which possesses a number of voltage lines and analog-to-digital converter lines for general attachment to a number of options such as a laser scanning device or touch probe.

A variety of probes may be threaded to handle assembly 56. In FIGURE 10A, a hard 1/4 inch diameter ball probe 158 is shown while in FIGURE 10B, a point probe 160 is shown. Both probes 158, 160 are threadably mounted to mount 156 (using male threaded member 157), which in turn, is threadably mounted to probe housing 58. Mount 156 also includes a plurality of flat surfaces 159 for facilitating engagement and disengagement of the probes using a wrench.

Turning now to FIGURES 11 and 12, a description of the controller or serial box 16 now follows. FIGURE 11 shows the front panel 162 of the controller or serial box 16. Front panel 162 has eight lights including power indicator light 164, error condition light 166, and six lights 20, one for each of the six transducers (identified as items 1-6) located in each transfer housing. Upon powering up, power light 164 will indicate power to the arm 12. At that time, all six transducer lights will indicate the status of each of the six transducers. In a preferred embodiment of this invention, the transducers are incremental digital optical encoders 80 and require referencing. (In a less preferred embodiment, the transducers may be analog devices). Hence, upon start up, each of the six joints (e.g., transfer housings) must be rotated to find the reference position at which time the six lights shall turn off.

In accordance with an important feature of the present invention, during usage, should any of the transducers approach its rotational endstop 106 from within 2 degrees, a light and an audible beep for that particular transducer indicates to the user that the user is too close to the end stop; and that the orientation of the arm should be readjusted for the current measurement. The serial box 16 will continue to measure but will not permit the trapping of the data until such endstop condition is removed. A typical situation where this endstop feature is necessary is the loss of a degree of freedom by the rotation of a particular transducer to its endstop limit and, hence, the applications of forces on the arm causing unmeasured deflections and inaccuracies in the measurement.

At any time during the measurement process, a variety of communication and calculation errors may occur. These are communicated to the user by a flashing of the error light and then a combination of lights of the six transducers indicating by code the particular error condition. It will be appreciated that front panel 162 may alternatively utilize an alphanumeric LCD panel giving alphanumeric error and endstop warnings.

Turning to FIGURE 12, the rear panel 168 of serial box 16 includes a variety of standard PC connectors and switches including a reset button 170 which resets the microprocessor; an AC input fan 172 for air circulation; a connector 174 for a standard PC AT keyboard, a connector 176 for an optional VGA board for monitoring of the internal operations of serial box 16, connector 178 for receiving the variety of signal lines for the CMM data, and connector 180 for the standard RS232 connector for the host 18.

Serial box 16 is responsible for monitoring the temperature of the CMM and in real time modifying the kinematics or mathematics describing its motion according to formulas describing the expansion and contraction of the various components due to changes in temperature. For this purpose, and in accordance with an important feature of this invention, a temperature monitoring board 182 (which includes a temperature transducer) is positioned at the location of the second joint 42 on the interior of a cover 184 (see FIGURES 4 and 5). CMM 10 is preferably constructed of aircraft grade aluminum externally and anodized. Preferably, the entire arm 12 is constructed of the same material except for the mounting screws which are stainless steel. The same material is used throughout in order to make uniform the expansion and contraction characteristics of arm 12 and make it more amenable to electronic compensation. More importantly, the extreme degree of stability required between all parts through the large temperature range requires that there be no differential thermal expansion between the parts. As mentioned, the temperature transducer 182 is preferably located at transfer housing 42 because it is believed that this location defines the area of highest mass and is therefore the last area to be stabilized after a large temperature fluctuation.

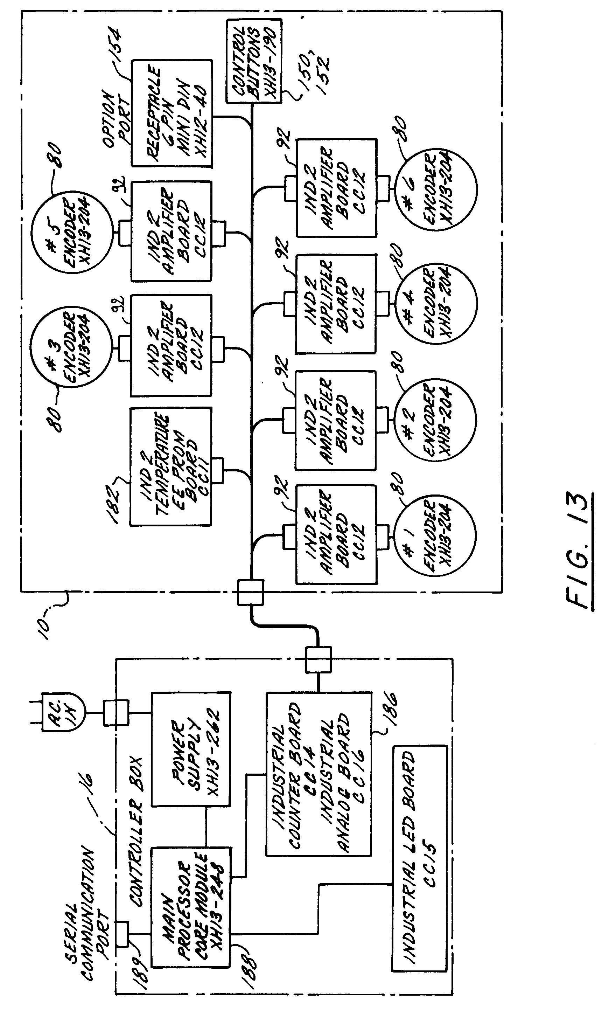

Referring now to FIGURE 13, the overall electronic schematic layout for CMM 10 and serial box 16 is shown. Six encoders 80 are shown with each encoder having an amplifier board 92 located in close proximity to it for the minimization of noise on signal transfer. An option port 154 is shown which is a six pin connector available at the handle 56 for the attachment of a variety of options. Two control buttons 150 and 152 for indicating to serial box 16 the measurement process, are also shown.

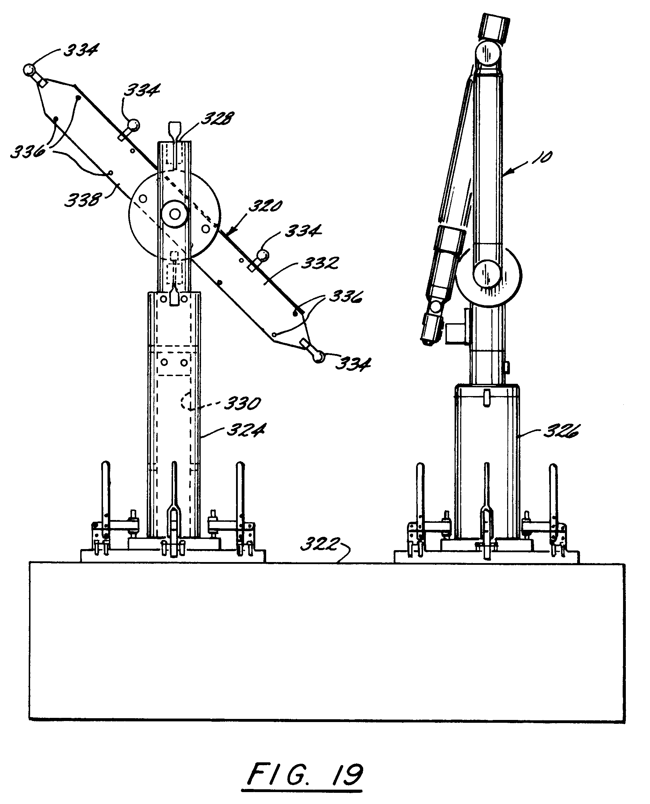

The temperature transducer is associated with temperature monitoring board 182 which is also located in arm 12 as shown in FIGURE 13. The temperature board 182 preferably comprises an EEPROM board used to contain a variety of specific calibration and serial number data on the arm (see discussion regarding FIGURES 19-21). This is an important feature because it permits high quality control of CMM 10 and precludes the inadvertent mix-up of software and arms. This also means that the CMM arm 12 is a stand alone device not requiring specific calibration data to reside in controller box 16 which may need to be separately serviced and/or switched with other machines.

The electronic and pulse data from the arm electronics is then transmitted to a combined analog-to-digital converter/digital counting board 186 which is a paired set comprising a 12 bit analog to digital converter and a multi channel 16 bit digital counter. Board 186 is positioned on the standard buss of the controller box. The counting information is processed using the main processor or core module 188 (comprising a commercially available Intel 286 microprocessor such as a part number CMX-286-Q51 available from Ampro) and programs stored on an EEPROM also residing in the controller box. Subsequent data is then transmitted through the serial communication port 189.

The microprocessor-based serial box 16 permits preprocessing of calculations specific to CMM 10 without host level processing requirements. Typical examples of such preprocessor calculations include coordinate system transformations; conversion of units; leap-frogging from one coordinate system to another by using an intermediary jig; performance of certain certification procedures, including calculations of distance between 2 balls (such as in ANSI B89 ballbar); and outputting data in specific formats required for downloading to a variety of hosts and user programs.

The serial box is configured to communicate with a variety of host formats including PC, MS DOS, Windows, Unix, Apple, VME and others. Thus, the serial box processes the raw transducer data on an ongoing basis and responds to the information requests or polling of the host computer with the desired three dimensional positional or orientational information. The language of the serial box is in such a form that drivers or computer communication subroutines in microprocessor 188 are written in the language of the host computer so as to drive the serial port and communicate with CMM 10. This function is designated the "intelligent multi-protocol emulation and autoswitching" function and works as follows: A variety of host programs may be installed on the host computer. These host programs will poll the serial port with a variety of requests to which the serial box must respond. A number of protocols have been preprogrammed into the serial box to responds to polls or inquiries on the serial port for a variety of different, popular softwares. A polling request by a software requires a specific response. The serial box will receive the polling request, establish which protocol it belongs to, and respond in the appropriate manner. This allows transparent communication between CMM 10 and a wide variety of application software such as computer aided design and quality control softwares, e.g., AutoCad® from Autodesk, Inc., CADKEY® from Cadkey, Inc., and other CAD programs; as well as quality control programs such as GEOMET® from Geomet Systems, Inc. and Micromeasure III from Brown and Sharpe, Inc.

The three dimensional CMM of the present invention operates as follows. Upon power up, the microprocessor 188 in the serial box 16 undergoes start up self-checking procedures and supplies power through the instrument port to arm 12 of CMM 10. The microprocessor and software residing on EEPROM 182 determines that upon initial power up none of the encoders 80 have been initialized. Hence, the microprocessor 188 sends a signal to the display board lighting all the lights 20, indicating a need to be referenced. The user will then mechanically move the arm which will cause the transducers to individually scan their range, at which time a reference mark is passed. When the reference mark is passed, the digital counter board 186 responds by trapping its location and identifying to the front display board 20 that the transducer has been referenced and the light is extinguished. Once all transducers have been referenced, the system establishes serial communication with the host and waits for further instruction. Pressing of the front or back button of handle 56 will initiate a measurement process. Pressing the front button 150 will trap the current transducer readings. Pressing the back button 152 will indicate to the microprocessor that these values are to be translated into dimensional coordinates and issued through the serial port to the host 18. The host 18 and the serial box 16 will then continue to react to each other's serial line requests.

Turning now to FIGURES 19, 20 and 21 subsequent to assembly of CMM 10, the device is optimized or calibrated by altering the program software to account for any measured imperfections in assembly or machining. This initial calibration is accomplished in two stages. First, a variety of dimensional measurements are made which include positions, orientations and dimensions throughout the entire volume of the device. Subsequently, an optimization software program is used to determine the actual misalignments exiting at each of the joint axes and, hence, adjusting the kinematic formulas describing the motion of the arm. The general result is that imperfect machining and assembly is rendered perfect through the identification of those imperfections and their inclusion in the kinematics of the device.

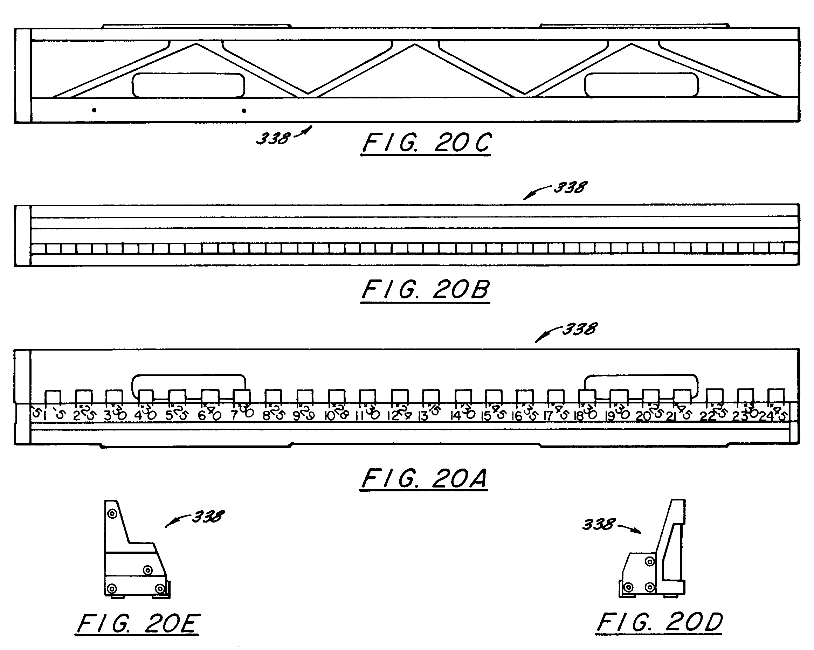

Referring to FIGURES 19 and 20A-E, due to the huge amount of data and the requirement that it be accurately and easily obtained, a calibration and testing jig is shown at 320. Jig 320 is comprised of a large granite plate 322 to which are attached two spaced towers 324, 326 which can rotate 360 degrees in the horizontal plane. The CMM 10 is mounted on tower 326 and the adjustable dimensional testing jig 320 is mounted on the other tower 324. Jig 320 is mounted on an extendible vertical arm 328 which is vertically displaceable within an opening 330 through tower 324. Arm 328 is shown in a fully extended position.

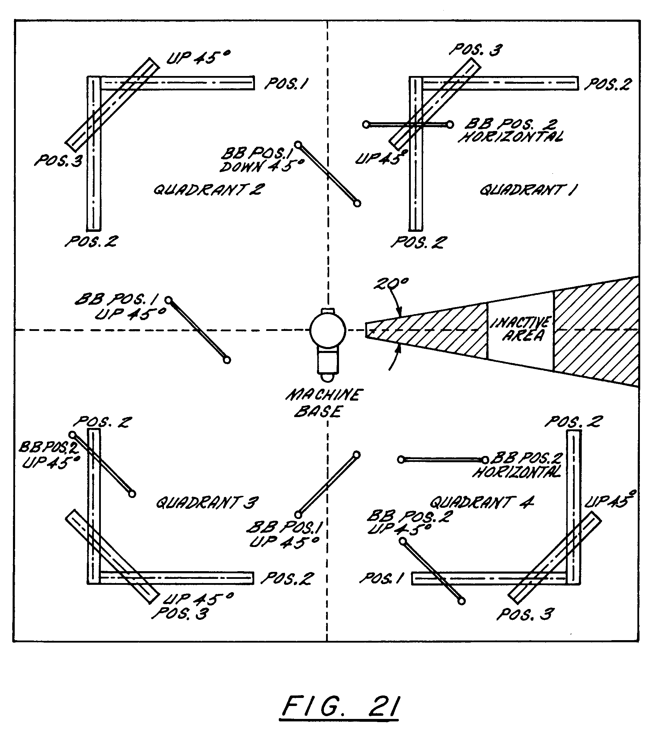

Still referring to FIGURES 19 and 20A-E, the adjustable dimensional testing jig 320 is comprised of three basic components: a 24 inch bar 332 on which is found a set of precision balls 334, a series of holes 336 positioned along its length, and a 24 inch precision step gauge 338 (shown in detail in FIGURES 20A-E). Arm 332 is used to measure the positions of the holes, steps and balls in a variety of positions for the testing jig and in all areas of the volume of the arm as shown in FIGURE 21. This data is then optimized. In summary, the optimization procedure can be described as follows. Standard test jig 320 with predetermined positions and orientations of objects is measured by arm 10. The data is then processed through a multi-variable optimization program created to provide the relative misalignment and dimension of all major components of the arm. Optimization is performed, at which time a calibration file is produced containing the overall characteristics of the arm. These overall characteristics and subsequent transducer readings are combined in a variety of kinematic formulas which will generate the X, Y and Z values in an absolute coordinate system.

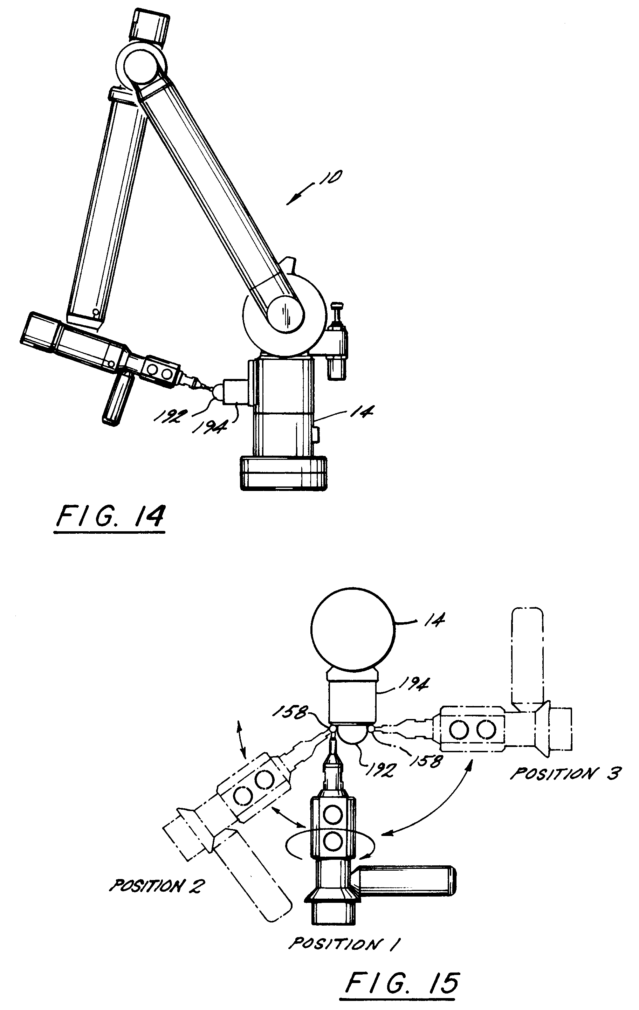

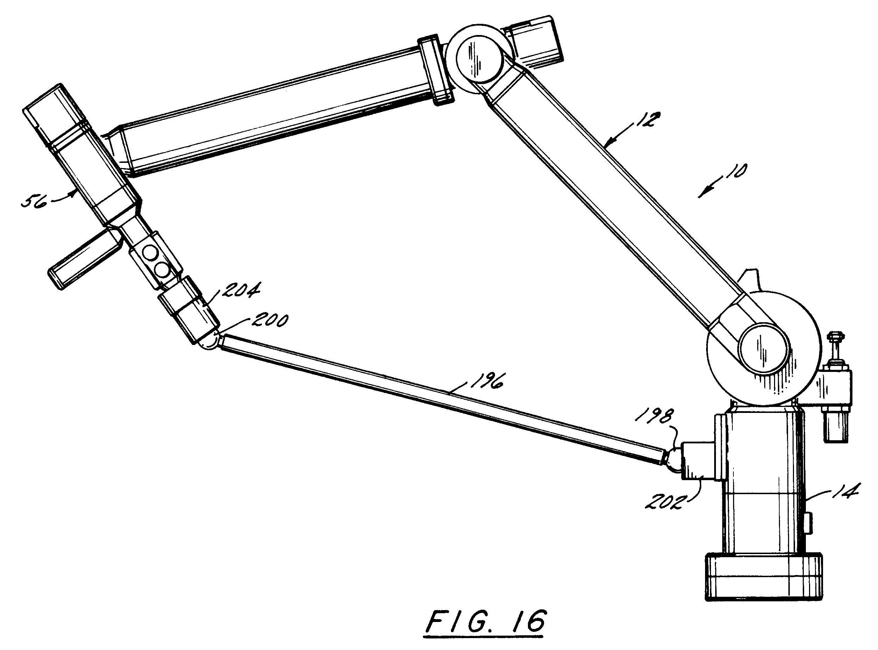

In order to further optimize performance, a novel reference ball 192 extends laterally from a detachable mount 194 attached to base 14 of CMM 10 (see FIGURES 14 and 15). By locating reference ball 192 at base 14, ball 92 represents the absolute origin of the device (0, 0, 0) corresponding to the X, Y and Z axes. Because of the known position of reference ball 192, positioning of the tips, as shown in FIGURE 15, allows to determine the coordinates of the digitizer tip 158 in relationship to the last link of CMM 10. Knowledge of this position allows CMM 10 to determine the position of the center of that ball when making subsequent measurements. In a general sense, this means that a variety of different probes may then be attached depending on the particular application and each can be calibrated against the reference ball.

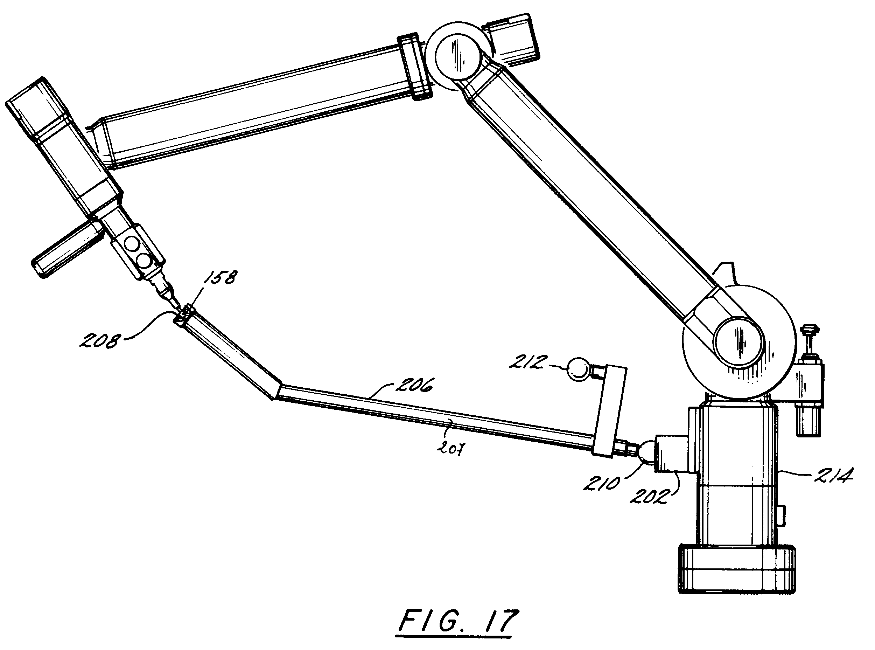

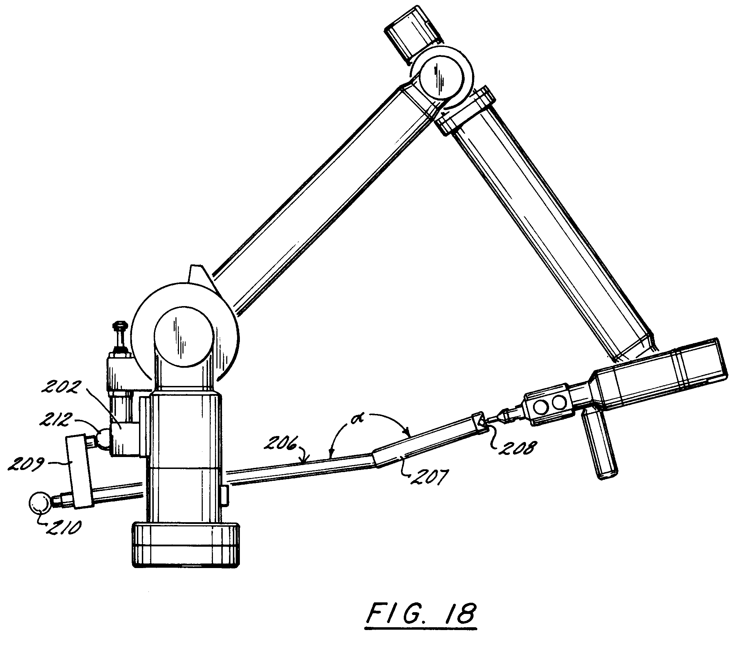

Because of the portable nature of the present invention, it will be subjected to significant mishandling and repositioning in a variety of environments. Therefore, the present invention includes a protocol by which the user may establish a degree of volumetric accuracy prior to using a device according to a convenient maintenance schedule. Volumetric accuracy is defined, for example, according to ASME ANSI B891.1.12 (1989) standard, as the ability of a device to measure a fixed length which is positioned in its working volume in a variety of orientations. FIGURE 16 shows the capability of the proposed apparatus to do this using a first ballbar approach while FIGURES 17 and 18 depict a second ballbar approach.

FIGURE 16 shows a standard ballbar 196 at each end of which is positioned a precision spherical ball 198, 200 which are mounted respectively into two magnetic sockets 202 and 204. Socket 202 is located at base 14 of CMM 10 and socket 204 is located at probe handle 56. As arm 12 is moved about, the sockets 202, 204 and balls 198, 200 rotate to accommodate this movement and CMM 10 is required to measure the fixed distance between the center of ball 200 and socket 204 at the handle 56 and the center of ball 198 at the base. Remembering, of course, that socket 202 at base 14 represents the 0, 0, 0 coordinate of CMM 10, calibration software in control box 16 then calculates the vector length from the 0, 0, 0 to the center of the ball at the probe and this length, which, of course, is unchanging during the test, must measure constantly throughout the entire volume through multiple configurations and rotations of the handle and other joints.

It will be appreciated that the socket 204 at the handle, may tend to be inconvenient and inconclusive when wanting to verify the accuracy of a particular probe on the handle. Hence, a novel cone socket ballbar as shown at 206 in FIGURE 17 is used. Cone socket ballbar 206 includes a cone 208 at one end and two balls 210, 212 at the other end. The cone and balls are interconnected by a bar 207 having an angled portion with an angle α preferably comprising 160° degrees. (see FIGURE 18). Ball 212 is attached to a mount 211 which extends laterally from bar 207. A ball probe 158 or point probe 160 is positioned in cone socket 208 and ball 210 can be mounted in the standard magnetic socket 202 of base 14 of CMM 10. As in the calibration method of FIGURE 16, a number of positions of the ball and bar and joint positions are measured and the distance between cone socket 208 and ball 210 must remain constant. It is the nature of the positioning of ball socket 202 that the user will not be able to reach on the far side of the machine (position shown by Item 214). To this end, ball 212 is used as shown in FIGURE 18. This allows the user to position cone ballbar 206 so as to reach on the reverse far side of CMM 10 in order to measure the distance between the center of ball 212 and the center of cone socket 208.

In accordance with the present invention, a novel method is provided wherein the CMM 10 is used for programming the operational paths for computer controlled devices such as multi-axis machine tools and robotics. As mentioned, a serious limitation in the usability of robotics and multi-axis machines is the time and effort required to program intricate and convoluted tool paths in an effort to perform a function such as with a welding or sanding robot or in a machine tool required to machine complex plastic molds. However, a 6-degree of freedom electrogoniometric device of the kind described above provides the X, Y, Z position at the end of the probe as well as the I, J, K or direction cosines or orientation of the probe, all of which can be used in a novel method for programming such computer controlled devices. It is this position and/or orientation which defines the functionality of the multi-axis device or robot being programmed. The sixth axis of rotation usually is the rotational axis of the cutting or sanding tool or fixed position welding grips mounted on a sixth axis of a robot.

It will be appreciated that the programming of multi-axis devices in accordance with this invention applies to all degrees of freedom including 3, 4, 5, 6, 7 and up axes of rotation. For example, a coordinate measuring machine with only 3-degrees of freedom will be able to measure and store positional or orientation data (as opposed to both positional and orientation data) and to provide the tool path or manufacturing operation sequence to a 3-axis (or greater) machine center or robot. A CMM with at least 5-degrees of freedom will provide data on both position (X, Y, Z) and orientation (I, J, K) to a 5-axis (or greater) machine center or robot.

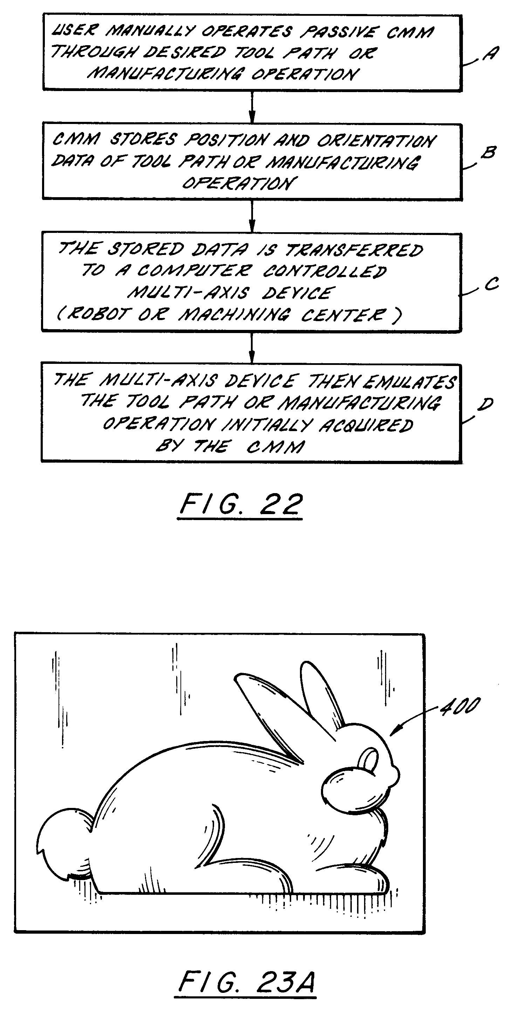

In accordance with the method of this invention, and as schematically set forth in steps A-D of the flow chart of FIGURE 22, the user simply manually operates the lightweight, easy-to-handle and passive electrogoniometric device of this invention with a simulated tool at its digitizer end for the emulation of either a tool path or manufacturing operation whereupon the CMM, at a predetermined rate, accumulates the X, Y, Z and/or I, J, K orientation data of the manufacturing tool. This data then is transferred according to industry standard formats to a CNC or computer numerically controlled device such as a robot or machining center for the reproduction of the motions emulated using the electrogoniometer 10.

An example of this method applied to a computer controlled 5-axis machine tool is depicted in FIGURES 23A-C. In FIGURE 23A, a complex part is shown which must be replicated on a multi-axis machining center. In this example, the complex part is a mold 400 for making chocolate bunnies. In order to replicate mold 400, the machining center must be programmed with the required tool path. Tool path is defined by position (X, Y, Z) or orientation (I, J, K) or both. If a 5-axis (or more) machining center or robot is required to be programmed, than data on both position and orientation is needed. If a 3-axis machining center or robot is required to be programmed, than only positional or orientation information is required.

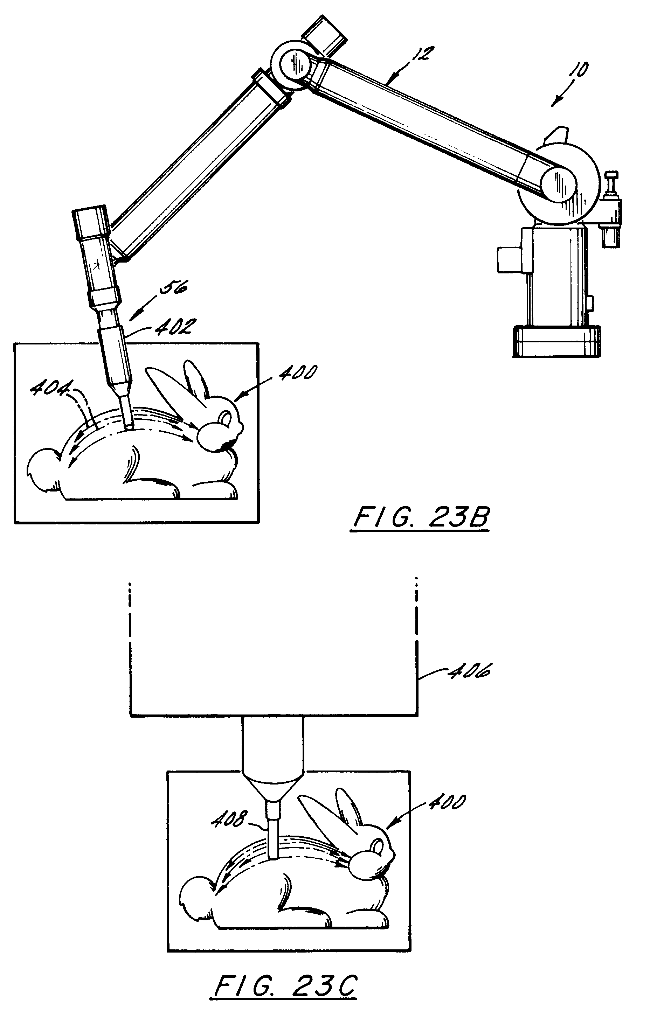

In FIGURE 23B, a CMM 10 has a cutting tool 402 (or simulated cutting tool) attached to a collet on the handle/probe assembly 56 at the end of measurement arm 12. The user then simulates the desired tool path as shown by the lines 404 (item A in FIGURE 22). As described in detail above, the measurement arm 22 records the position and orientation of tool 402 and saves (or stores) this data to an industry formatted data file (item B in FIGURE 22).

Next, referring to FIGURE 23C, the stored data file is loaded into the microprocessor of a multi-axis machining center 406 (item C in FIGURE 22). The complex part (chocolate bunny mold 400) is then replicated or emulated by machine tool 408 based on the position and orientation data originally acquired by CMM 10 (item D in FIGURE 22).

At this point, the user may optimize the tool path and/or other cutting parameters such as speed. If more data is required, further simulation (e.g., steps A-C of FIGURE 22 may be repeated) may be performed and the data appended to the original data set. Because the CMM is operated by a human, the data will contain some error caused by jitter and the like. Therefore, the data is preferably subjected to a known smoothing or refining CAD/CAM program such as MASTERCAM by CNC Software, Inc.or SURFCAM by Surfware, Inc.

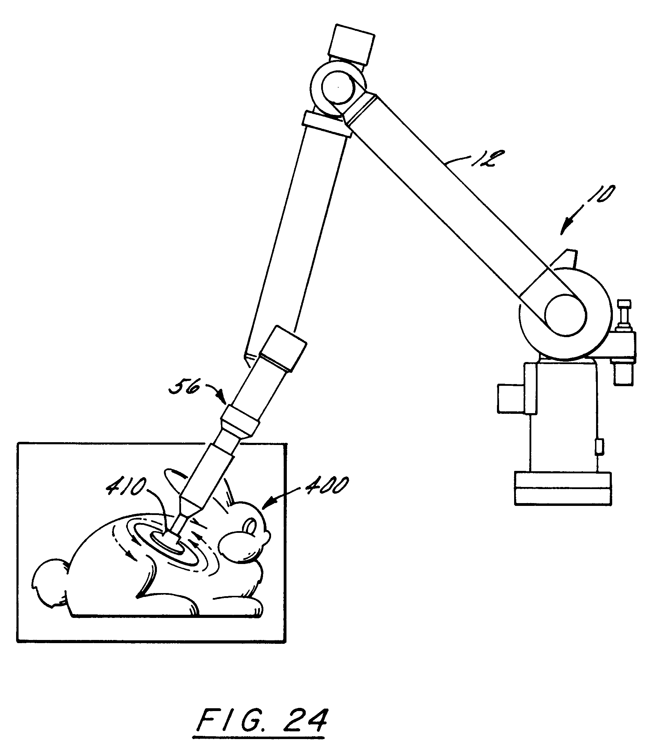

FIGURE 24 depicts an example of the method of this invention in connection with a robotics application. The programming of a manufacturing operation for a multi-axis robot utilizes the same steps as described in FIGURES 22A-D or FIGURES 23A-C. In this case, a robot which is used for a manufacturing operation such as sanding the surfaces of complex parts is "simulation trained" by the use of a sanding disc tool 410 provided at the end of measurement arm 12. The position and orientation data is stored by CMM 10, and the data file (in a robot industry standard format) is then loaded into the robot processor and/or executed. Other examples of robotic (and machining) operations which are useful with the method of the invention include cutting, machining, polishing, grinding, painting, cleaning and welding.

## Claims

1. A method for programming a computer controlled multi-axis device (406), characterized by the steps of
a) operating a measurement probe (402, 410) of a passive three dimensional coordinate measuring machine (10) through a selected three dimensional path or operation (404);
b) developing three dimensional data of position and/or orientation from step a) and storing said data;
c) transferring said data to the controller of said multi-axis device; and
d) causing the multi-axis device (406) to replicate the selected path or operation (404) based on said data developed by the coordinate measuring machine (10).

2. The method as claimed in 1 characterized in that said multi-axis device comprises a device having at least 3 axes and the data developed in step b) comprises position or orientation data.

3. The method as claimed in 1 or 2 characterized in that said multi-axis device comprises a device having at least 5 axes and the data developed in step b) comprises position and orientation data.

4. The method as claimed in 1,2 or 3 characterized in that said multi-axis device comprises a machining device including a machining tool (408).

5. The method as claimed in claim 4 characterized in that said measurement probe comprises a simulated tool (402) for emulation of said machining tool (408).

6. The method as claimed in 1 characterized in that said multi-axis device comprises a robot.

7. The method as claimed in any one of claims 1 to 6 characterized in that said manufacturing operation is selected from the group consisting of welding, sanding, cutting, machining, polishing, grinding, painting and cleaning.

8. The method as claimed in any one of claims 1 to 7 characterized by optimizing the replicated path or operation by repeating step (a) - (b).

9. The method as claimed in any one of claims 1 to 8 characterized by smoothing the data developed from step (b).

10. The method as claimed in 9 characterized in that said data is smoothed using a CAD/CAM computer program.

11. The method as claimed in any one of claims 1 to 10 characterized in that said CMM includes 6 degrees of freedom.

12. The method as claimed in any one of claims 1 to 11 characterized in that said CMM comprises
a movable arm (12) having opposed first and second ends, said arm including a plurality of joints with each joint corresponding to a degree of freedom such that said arm is movable within a selected volume, each of said joints comprising a rotational transfer housing (40, 42, 46, 48) for housing a position transducer (80), said transducer producing a position signal;
a support base (14) attached to said first end of said movable arm (12);
a probe (56) attached to said second end of said movable arm (12); and
electronic circuit means for receiving said position signals from said transducer (80) and providing a digital coordinate corresponding to the position of said probe (56) in a selected volume.

13. The method as claimed in 11 characterized in that said transfer housing (40, 42, 46, 48) further includes
a carrier (62) having a shaft extending therefrom;
a casing having an opening therethrough for receiving said shaft of said carrier (62); and
roller bearings (60, 68) on said shaft within said opening.

14. The measuring method as claimed in 12 or 13 characterized in that said transfer housing (40, 42, 46, 48) includes an universal mounting plate (82) for mounting said position transducer (80) to said carrier (62).

15. The measuring method as claimed in 12, 13 or 14 characterized in that said transfer housing (40, 42, 46, 48) includes coupler means (84) attached to said position transducer and an extension shaft (86) connecting said transducer (80) to said shaft of said carrier (62).

16. The measuring method as claimed in any one of claims 12 to 15 characterized in that said position transducer (80) comprises an encoder and said transfer housing (40, 42, 46, 48) includes a preamplifier circuit (92) in a location adjacent said encoder for transmitting amplified signals externally of said movable arm (12).

17. The measuring method as claimed in any one of claims 12 to 16 characterized in that said transfer housing (40, 42, 46, 48) further includes an endstop indicator (106) for preventing mechanical overload due to mechanical stressing of said transfer housing (40, 42, 46, 48).

18. The measuring method as claimed in any one of claims 12 to 17 characterized by temperature monitoring means in said arm (12) for monitoring temperature stability of said arm (12).

19. The measuring method as claimed in any one of claims 12 to 18 characterized by EEPROM circuit board means mounted in said arm (12) and encoded with calibration and identification data specific to a particular arm (12).

20. The measuring method as claimed in any one of claims 12 to 19 characterized by a discrete serial box (16) communicating with said arm (12) and including at least a portion of said electronic circuit means, said serial box including microprocessor means for preprocessing position data prior to transfer of said position data to a host computer (18).

21. The measuring method as claimed in 20 characterized in that said serial box further includes analog-to-digital/digital counter circuit board means for simultaneous capture of data from all of said position transducers and transfer of said captured data to said microprocessor means.

22. The measuring method as claimed in any one of claims 12 to 21 characterized in that each of said rotational transfer housing (40, 42, 46, 48)s have a modular, interchangeable configuration.

23. The measuring method as claimed in any one of claims 12 to 22 characterized in that said arm (12) is comprised of substantially the same material to maintain a substantially consistent coefficient of thermal expansion.

24. The measuring method as claimed in any one of claims 12 to 23 characterized in that said arm (12) includes wiring (118) and said wiring is integral to said arm (12).
